Europäisches Patentamt

**European Patent Office**

Office européen des brevets

(11) Publication number: **0 004 689**
A2

# EUROPEAN PATENT APPLICATION

(21) Application number: 79200151.3

(22) Date of filing: 29.03.79

(51) Int. Cl.²: **C 08 J 3/24**
C 04 B 25/06, B 29 G 1/00
C 08 L 67/06, B 29 C 5/04

(30) Priority: 01.04.78 NL 7803507

(43) Date of publication of application:
17.10.79 Bulletin 79/21

(84) Designated Contracting States:
BE DE FR GB IT NL

(71) Applicant: STAMICARBON B.V.
Postbus 10
NL-6160 MC Geleen(NL)

(72) Inventor: Van Gasse, René Leopold Eduard
Lietenstraat 19
B-3660 Opglabbeek(BE)

(74) Representative: Philippens, Martin Hubert Johan
Jacques et al,
OCTROOIBUREAU DSM Postbus 9
NL-6160 MA Geleen(NL)

(54) Process for making an object from a thermosetting plastic mortar.

(57) A process for making objects from a mixture of a thermosetting resin, mineral fillers, an alkali metal oxide, and hardener, in which process at least two different materials are prepared that are of substantially the same composition but contain different hardener components. The first material contains at least two hardener components that do not form enough free radicals to effect rapid hardening of the material but do rapidly form free radicals when mixed with the hardener components of the other material. The two materials are, in pasty condition, divided into small portions, whereupon these portions are mixed, the mixture is given the desired shape, and the object thus formed is hardened.

EP 0 004 689 A2

Croydon Printing Company Ltd.

1            2978

## PROCESS FOR MAKING AN OBJECT FROM A THERMOSETTING PLASTIC MORTAR

The invention relates to a process for making objects from a mixture of a thermosetting resin, mineral fillers, an alkali metal oxide and a hardener.

It is known that objects can very well be made from such a mixture in a compression mould at elevated pressure and temperature. One of the advantages of the application of elevated pressure and temperature is that all air is expelled from the moulding material. The composition of the material may be such that short glass fibres contained in it are regularly distributed. This is described, for instance, in NL-A 73 05807. A disadvantage of this process is in particular that its application requires an expensive compression plant with a heatable compression mould. This poses limitations especially as regards the dimensions of the products to be made.

It is also known to make objects, in particular sheets, as described in NL-A 65 05695, by puring a resin with hardener into a mould and subsequently spreading grain-shaped minerals in it. An advantage compared with the process described above is the absence of air-bubbles in the product, so that there is no need to apply a high pressure. On the other hand the resin content is higher, resulting in stresses being set up between the mineral grains, and thus in a reduction in the weather and water resistance. When applying this process, glass fibres cannot be introduced homogeneously.

A known process is hardening at the elevated temperature and pressure resulting from the centrifugal force that occurs during rotational casting of plastic mortars in the production of tubular products. The disadvantages attached to this process are the same as those already mentioned. An additional disadvantage is that the roughness of the inside of the product plays a role here. This problem is sometimes solved by applying an additional layer of a less strongly filled, low-viscosity resin, but then the properties of the internal surface differ from those of the rest of the constituent material.

The purpose of the invention is to provide a process by which, using the constituent parts mentioned at the commencement, objects can be made that do not contain any trapped air, that have a regular distribution of glass fibres, and that can be hardened rapidly without an increase in temperature, requiring only a brief application pressure. Further it is required that the starting material remain processable sufficiently long.

According to the invention this purpose is achieved if first at least two starting materials are prepared, each containing substantially equal quantities of unsaturated polyester resin, mineral fillers, short glass fibres and alkali metal oxide, and each containing at least two - for each material different - components that form enough free radicals to effect rapid hardening of the material in question but that do rapidly form free radicals upon contact with the components of the other material, which two materials are, in pasty condition, divided into small portions, whereupon these portions are mixed, the mixture is given the desired shape, and the object thus formed is hardened.

The term 'resin' is hereafter understood to mean a composition of components. Such a composition may, for instance, be a resin as mentioned in NL-A 77 06996, and may consist of unsaturated polyester resin, containing 80 to 95 per cent by weight of inorganic fillers with a grain size mainly between 0 and 500 microns, preferably 200 microns, and 0.5 to 5 per cent by weight of magnesium oxide referred to the unsaturated polyester resin, which mixture is thickened until it is compact and practically free of air.

The unsaturated polyester resin may be any suitable reaction product of multivalent alcohols and multivalent unsaturated acids or acidforming anhydrides. Representatives of the alcohols are propylene glycol, ethylene glycol, pentane diol, butane diol, butylene glycol, dipropylene glycol. Among the acids, maleic anhydride, phtalic anhydride, isophtalic anhydride, adipinic acid and the like are usually employed. Normally, the unsaturated polyester resin is cross-linked. Suitable for this purpose are unsaturated compounds, like styrene, methyl metacrylate, vinyl acetate or diallyl phtalate. As catalyst for this linkage the usual peroxides may be applied, such as benzoyl peroxide or tertiary butyl perbenzoate. A product like hydrated bisphenol A and catalyst, commercially known as 'Synolite 373', can also be used for the purpose.

As filler any inorganic filler is suitable, such as calcium magnesium carbonate (dolomite), calcium carbonate, powdered quartz, talc, various clay varieties, and the like. A well-mouldable material for objects having a wall thickness that is not too great, for instance between 5 and 10 mm, is obtained if the filler has a grain size that is mainly between 0 and 500 microns, by preference up to 200 microns.

The process is particularly suitable for making tubes of the material in question by the centrifugal method. For this purpose first at least two starting materials are prepared that each contain virtually equal quantities of unsaturated polyester resin, mineral fillers and alkali metal oxide, and that each contain at least two - for each material different - components that do not form enough free radicals to effect rapid hardening of the material in question but that do rapidly form free radicals upon contact with the components of the other material, which two materials are in pasty condition divided into small portions whereupon these portions in quantities that stoichiometrically agree with the quantities of the components forming free radicals, are premixed and supplied, or just simultaneously supplied, to a rotating tubular device, and once the portions being present in the desired thickness on the wall of the rotary mould they are flattened against the mould by means of a roller and brought into finished condition,whereupon the material is hardened.

It is possible to start from two materials, however, it will be clear that it is also possible to use more materials, provided the components are carefully selected. However, to keep the operation simple, the use of two materials will be preferred. The division into small portions can advantageously be effected in an extruder with a cutting head. Any air that may still be entrapped will also be removed completely.

The choice of the composition of the thermosetting resin, the mineral fillers and hardening components is not critical. Various compositions are possible, provided the principle of the invention is adhered to. The grain size distribution of the mineral fillers will be chosen to suit the nature of the object to be made; for tubes the filler selected will at least partially be rather coarse, for instance sand up to 0.5 mm. By preference, but not necessarily, the materials contain as filler short glass fibres (4-10 mm long) up to a quantity of about ten parts especially one to five parts by weight of the total, in order to reinforce the object made. The present process is eminently suitable for inclusion of these fibres.

For a better understanding the invention will be elucidated with an example.

Example

Two materials are prepared, with as main constituents the following components (parts by weight):

|  | material A | material B |
|---|---|---|
| polyester resin | 1000 | 1000 |
| powdered quartz | 2000 | 2000 |
| quartz grains, 50-300 microns | 2000 | 2000 |
| magnesium oxide | 20 | 20 |
| glass fibres, 9 mm | 250 | 250 |

Subsequently the following components (parts by weight) are further added to these two materials:

| MEK peroxide (50 %) | 40 | - |
| benzoyl peroxide (50 %) | - | 40 |
| cobalt octoate (1 %) | - | 40 |
| dimethyl aniline (10 %) | 40 | - |

(MEK stands for methyl ethyl ketone)

After the components have been mixed, the reaction of the carboxyl groups of the polyester resin with the MgO results in both materials thickening to non-sticking pastes, which, however, harden extremely slowly (long pot life). Subsequently both materials are mechanically divided into small portions with as maximum size 1 to 15 mm, by preference 5 to 10 mm. The portions of material A and material B are then mixed homogeneously, placed in a mould and flattened by briefly subjecting them to a mild pressure. With this pressure the object can be given the right shape or condition also on the non-mould side.

The reaction of the MEK peroxide of material A with the cobalt octoate of material B and the reaction of the benzoyl peroxide of material B with the dimethyl aniline of material A very rapidly result in the formation of enough free radicals to effect rapid hardening of the polyester resin of the two components. The hardening time of the above-mentioned materials can be taken to be approximately 10 minutes.

What the above amounts to is that if two materials are used that are composed of the polyester resin, the mineral filler, the alkali metal oxide and the hardener with the first material containing MEK peroxide and dimethyl aniline and the second material benzoyl peroxide and cobalt octoate, the MEK peroxide and the cobalt octoate, respectively the benzoyl peroxide and the dimethyl aniline in such stoichiometric quantities that, after flattening of the mixed materials, the formation of free radicals takes place in virtually the same degree everywhere in the material.

C L A I M S

1. Process for making objects from a mixture of a thermosetting resin, mineral fillers, an alkali metal oxide and a hardener, characterized in that at least two starting materials are prepared, each containing substantially equal quantities of unsaturated polyester resin, mineral fillers, short glass fibres and alkali metal oxide, and each containing at least two - for each material different - components that do not form enough free radicals to effect rapid hardening of the material in question but that do rapidly form free radicals upon contact with components of the other material, which two materials are, in pasty condition, divided into small portions, whereupon these portions are mixed, the mixture is given the desired shape, and the object thus formed is hardened.

2. Process according to claim 1, characterized in that the portions have as maximum size 1 to 15 mm, by preference 5 to 10 mm.

3. Process according to claim 1, characterized in that two materials are used that are composed of the polyester resin, the mineral filler, the alkali metal oxide and the hardener, with the first material containing MEK peroxide and dimethyl aniline and the second material benzoyl peroxide and cobalt octoate, the MEK peroxide and the cobalt octoate, respectively the benzoyl peroxide and the dimethyl aniline being present in such stoichiometrical quantities that, after flattening of the mixed materials, free radicals are formed in virtually the same degree everywhere.

4. Process for making tubes by the centrifugal method from a mixture of a thermosetting resin, mineral fillers, alkali metal oxide and hardener, which process is characterized in that at least two starting materials are prepared that each contain substantially equal quantities of unsaturated polyester resin, mineral fillers and alkali metal oxide, and that each contain at least two - for each material different - components that do not form enough free radicals to effect rapid hardening of the material in question, but that do rapidly form free radicals upon contact with the components of the other material, which two materials are in pasty condition divided into small portions, whereupon these portions, in quantities that stoichiometrically agree with the quantities of the components forming free radicals, are premixed and supplied, or just simultaneously supplied, to a rotating tubular device, and once the portions being present in the desired thickness on the wall of the rotary mould they are flattened against the inner wall of the mould by means of a roller and brought into finished condition, whereupon, the material is hardened.

5. Process according to claims 1-4, characterized in that both materials contain short glass fibres with a length of 4 to 10 mm in a quantity of up to 10 parts by weight of the total.

6. Process according to claims 4 and 5, characterized in that the mineral filler contains sand in a grain size till 0.5 mm.